# EUROPEAN PATENT APPLICATION

(11) **EP 3 214 756 A1**
(43) Date of publication of application: **06.09.2017**
(21) Application number: 15855757.9
(22) Date of filing: 10.04.2015
(51) Int. Cl.: H02P 29/00, A01G 3/08

(54) **PRUNER SPEED REGULATION CONTROL METHOD**

(30) Priority: 28.10.2014 CN 201410585183
(71) Applicant: Changzhou Globe Co., Ltd., Jiangsu 213023 (CN)
(72) Inventor: MENG, Sili, Changzhou Jiangsu 213023 (CN)
(74) Representative: Becker Kurig Straus
(86) International application number: PCT/CN2015/076225
(87) International publication number: WO 2016/065848

(57) **Abstract**

A method of controlling speed change of a pruning machine including the steps of: pressing a power switch, setting up a power supply system, and sending an activating signal; detecting voltage of the power supply system, and judging whether operation of the power supply system is maintained, sending a maintaining output signal and maintaining the voltage of the power supply system; pressing a speed-regulating trigger button, converting a speed-regulating signal into an electrical signal for speed judgment, at the same time sending a driving signal after detection of a motor position signal, the driving signal being received by a three-phase bridge; using a sampling resistor to convert a current into a voltage signal and inputting the voltage signal into the central processor, and comparing a set current value according to the input voltage signal, thereby controlling the motor to rotate according to a certain proportion, or a maximum power.

## Description

### FIELD OF THE TECHNOLOGY

The present application relates to a method of controlling speed change, and more particularly to a method of controlling speed change of a pruning machine.

### BACKGROUND

Existing pruning machines are using on/off switch to directly control operation of the machine. When the machine is on no load, power is consumed for nothing. When the machine is on full load, the current is too large and is not easy to safeguard.

### SUMMARY

The technical problem to be solved in the present application is to provide a method of controlling speed change of a pruning machine. When the machine is on no load, it enters an energy-saving mode, and the output power is small. When the machine is on full load, it enters a constant power mode so that the machine runs at a maximum power without current change. Hence, it is easy to safeguard, and operation is smooth. It can solve the power consumption on no load issue as well as the easy safeguarding issue.

In order to solve the above technical problems, a technical aspect is to provide a method of controlling speed change of a pruning machine including the steps of:
(1) pressing a power switch, setting up a power supply system, and sending an activating signal;
(2) detecting, by a central processor, a voltage of the power supply system, and judging whether operation of the power supply system is maintained, thereby sending a maintaining output signal and maintaining the voltage of the power supply system;
(3) pressing a button of a speed-regulating trigger, converting a speed-regulating signal transmitted from the speed-regulating trigger into an electrical signal by the central processor through a wire for carrying out speed judgment, at the same time sending a driving signal after detection of a motor position signal, the driving signal being received by a three-phase bridge, thereby controlling rotation of a motor;
(4) using a sampling resistor to convert a current into a voltage signal and inputting the voltage signal into the central processor, and comparing a set current value according to the input voltage signal, thereby controlling the motor to rotate according to a certain proportion, or a maximum power;
(5) repeating the above steps in the order of (1), (2), (3) and (4).

In a preferred embodiment, the power supply signal in the power supply system may be 5V or 10V.

In a preferred embodiment, a field effect tube of the three-phase bridge may be used for receiving the driving signal, and the field effect tube causes sequential conduction of the three-phase after receiving the driving signal.

In a preferred embodiment, the speed-regulating trigger may be a potentiometer.

In a preferred embodiment, entering energy-saving mode through a set period of time, and locking a smaller three-phase bridge conducting duty cycle, when a value of the input current signal is smaller than the set current value.

In a preferred embodiment, in step (4), locking a maximum three-phase bridge conducting duty cycle, when a value of the input current signal is greater than the set current value, and rendering a motor output power constant through the central processor after output of the maximum power.

The beneficial effect of the method of controlling speed change of a pruning machine of the present application is that when the pruning machine is on no load, it enters an energy-saving mode, and the output power is small. When the machine is on full load, it enters a constant power mode so that the machine runs at a maximum power without current change. Hence, it is easy to safeguard, and operation is smooth. It can solve the power consumption on no load issue as well as the easy safeguarding issue.

### BRIEF DESCRIPTION OF THE DRAWINGS

In order to more clearly illustrate the technical solution in the embodiments, the following drawings, which are intended to be used in the description of the embodiments, are briefly described. It will be apparent that the drawings in the following description are merely exemplary embodiments. It will be apparent to those skilled in the art that, without making effort of creative work, other drawings may be obtained in accordance with these drawings, wherein
Figure 1 is a control flow diagram of a preferred embodiment of a method of controlling speed change of a pruning machine of the present application; and
Figure 2 is a schematic diagram of a preferred embodiment of the method of controlling speed change of a pruning machine of the present application.
Figure 3 is drive circuit diagram A of a preferred embodiment of the method of controlling speed change of a pruning machine of the present application.
Figure 4 is drive circuit diagram B of a preferred embodiment of the method of controlling speed change of a pruning machine of the present application.

### DETAILED DESCRIPTION

The embodiments described in the present application will be apparent from the following description of the embodiments. It will be apparent that the described embodiments are only a part of the embodiments and are not intended to be exhaustive. All other embodiments obtained by those of ordinary skill in the art without making creative work are within the scope of protection based on the embodiments in the present application.

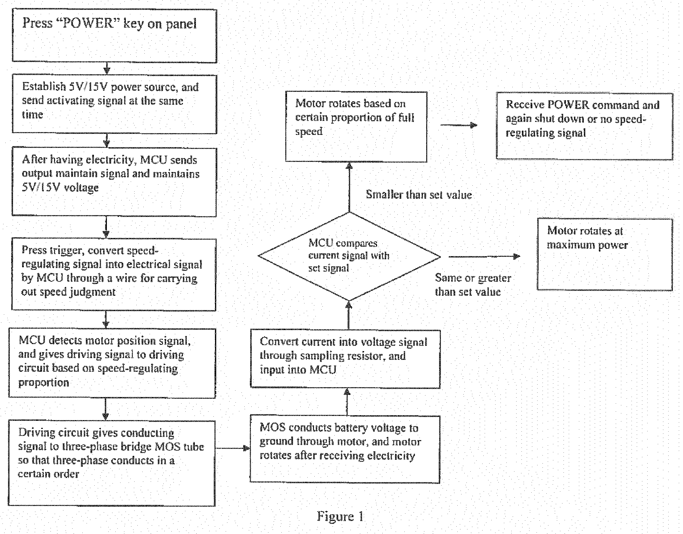

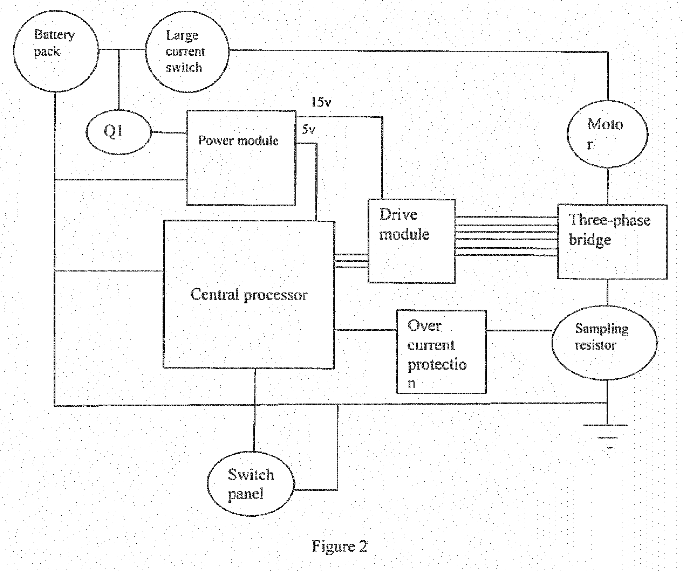

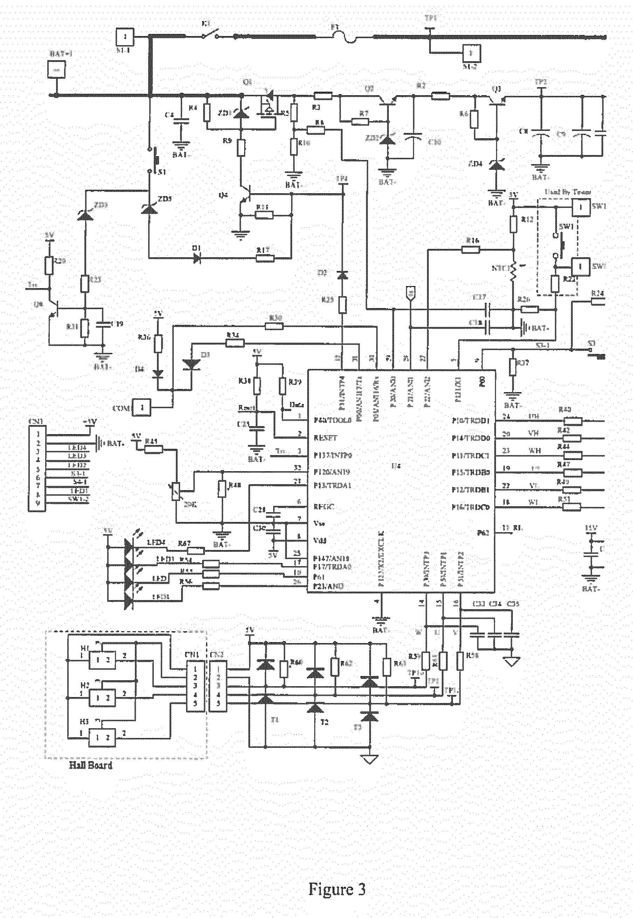

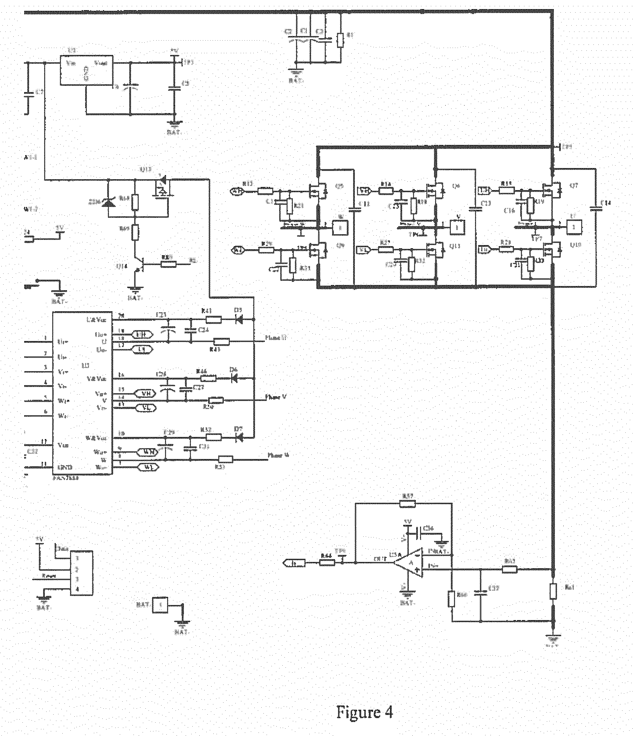

Referring to Figures 1, Figures 2, Figures 3 and 4, Figures 3 and Figures 4 form a drive circuit described in the present invention together.
An embodiment of the method of controlling speed change of a pruning machine of the present application may include the steps of:
(1) pressing a power switch, setting up a power supply system, and sending an activating signal;
(2) detecting, by a central processor, a voltage of the power supply system, and judging whether operation of the power supply system is maintained, thereby sending a maintaining output signal and maintaining the voltage of the power supply system;
(3) pressing a button of a speed-regulating trigger, converting a speed-regulating signal transmitted from the speed-regulating trigger into an electrical signal by the central processor through a wire for carrying out speed judgment, at the same time sending a driving signal after detection of a motor position signal, the driving signal being received by a three-phase bridge, thereby controlling rotation of a motor;
(4) using a sampling resistor to convert a current into a voltage signal and inputting the voltage signal into the central processor, and comparing a set current value according to the input voltage signal, thereby controlling the motor to rotate according to a certain proportion, or a maximum power;
(5) repeating the above steps in the order of (1), (2), (3) and (4).

The power supply signal in the power supply system may be 5V or 10V.

A field effect tube of the three-phase bridge may be used for receiving the driving signal, and the field effect tube causes sequential conduction of the three-phase after receiving the driving signal.

The speed-regulating trigger may be a potentiometer.

Entering energy-saving mode through a set period of time, and locking a smaller three-phase bridge conducting duty cycle, when a value of the input current signal is smaller than the set current value.

In step (4), locking a maximum three-phase bridge conducting duty cycle, when a value of the input current signal is greater than the set current value, and rendering a motor output power constant through the central processor after output of the maximum power.

In one embodiment, the central processor can be a MCU, and the power switch can be an on/off switch.

Machine operation principle: First, a user presses the power button on the panel to establish a power supply system. After the MCU detects a voltage, it sends a maintaining signal, so that 5V/15V is maintained. If there is no operation instruction after one minute, the MCU maintaining signal will be automatically canceled. The power supply system will have no 5V/15V output. At this time, the user presses the speed-regulating trigger. After the MCU receives a signal and sends a drive signal to drive a three-phase bridge to conduct in a certain order, the motor runs after receiving electricity. After speed change through a gear box, the blades of the pruning machine move. Same shut down principle: A user presses the power button. The MCU first short-circuits the motor after receiving a signal, and then cuts off the 5V/15V voltage. Or, the user releases a trigger. The MCU first short-circuits the motor after receiving a speed-regulating signal (which is 0 at this time), and then cuts off the 5V/15V voltage.

Speed-regulation principle: Provide the MCU a potential (0-5V) through a trigger, which is a potentiometer. The MCU compares it with the 5V to get a percentage of speed regulation. And then after calculation, give the drive circuit a duty cycle with an addition correction factor to drive the three-phase bridge to conduct in a certain order. The motor runs after receiving electricity. At this time, retrieve motor current through a current sampling circuit, feedback to the MCU, compare it with the MCU's set value. When the motor current value is less than the set value, enter into energy-saving mode after 10 seconds (or other set period of time), lock the smaller three-phase bridge conducting duty cycle, and the output power is smaller. When the motor current value is greater than or equal to the set value, lock the maximum (generally close to 100%) three-phase bridge conducting duty cycle, make the output power constant through the MCU after output of maximum power.

The set value is slightly smaller than the actual operating current. For example, when the actual current is 10A, the set value may be 8-9A.

Energy-saving mode: When the current is less than the set value, the duty cycle of the driving MOS is given a value of less than 100%, so that the MOS is not totally conductive. When the current reaches that value, the duty cycle of the driving MOS is maximized. MOS are all conductive, and the power is maximized.

The beneficial effect of the method of controlling speed change of a pruning machine of the present application is that when the pruning machine is on no load, it enters an energy-saving mode, and the output power is small. When the machine is on full load, it enters a constant power mode so that the machine runs at a maximum power without current change. Hence, it is easy to safeguard, and operation is smooth. It can solve the power consumption on no load issue as well as the easy safeguarding issue.

The above-mentioned embodiments are merely some embodiments of the method of controlling speed change of a pruning machine of the present application, and the scope of patent protection is not limited to these embodiments. Any equivalent structures or equivalent changes of process using the contents of the present patent specification, or any direct/indirect applications in other related field of technology are within the scope of patent protection of the present application.

## Claims

1. A method of controlling speed change of a pruning machine, wherein comprising the steps of:
(1) pressing a power switch, setting up a power supply system, and sending an activating signal;
(2) detecting, by a central processor, a voltage of the power supply system, and judging whether operation of the power supply system is maintained, thereby sending a maintaining output signal and maintaining the voltage of the power supply system;
(3) pressing a button of a speed-regulating trigger, converting a speed-regulating signal transmitted from the speed-regulating trigger into an electrical signal by the central processor through a wire for carrying out speed judgment, at the same time sending a driving signal after detection of a motor position signal, the driving signal being received by a three-phase bridge, thereby controlling rotation of a motor;
(4) using a sampling resistor to convert a current into a voltage signal and inputting the voltage signal into the central processor and comparing a set current value according to the input current signal, thereby controlling the motor to rotate according to a certain proportion, or a maximum power;
(5) repeating the above steps in the order of (1), (2), (3) and (4).

2. The method of controlling speed change of a pruning machine according to claim 1, wherein that a power supply signal in the power supply system is 5V or 10V.

3. The method of controlling speed change of a pruning machine according to claim 2, wherein that a field effect tube of the three-phase bridge is used for receiving the driving signal, and the field effect tube causes sequential conduction of the three-phase after receiving the driving signal.

4. The method of controlling speed change of a pruning machine according to claim 3, wherein that the speed-regulating trigger is a potentiometer.

5. The method of controlling speed change of a pruning machine according to claim 4, wherein comprising the steps of entering energy-saving mode through a set period of time, and locking a smaller three-phase bridge conducting duty cycle, when a value of the input current signal is smaller than the set current value.

6. The method of controlling speed change of a pruning machine according to claim 5, wherein comprising, in step (4), the steps of locking a maximum three-phase bridge conducting duty cycle, when a value of the input current signal is greater than the set current value, and rendering a motor output power constant through the central processor after output of the maximum power.
